(19) Europäisches Patentamt / European Patent Office / Office européen des brevets

(11) **EP 2 647 683 A2**

(12) **EUROPEAN PATENT APPLICATION**


(43) Date of publication:
**09.10.2013 Bulletin 2013/41**

(21) Application number: **13162387.8**

(22) Date of filing: **04.04.2013**

(51) Int Cl.:
***C09J 7/02*** *(2006.01)* ***C09J 133/06*** *(2006.01)*
***C08K 3/24*** *(2006.01)* ***C09J 9/02*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.04.2012 JP 2012087560**



(71) Applicant: **NITTO DENKO CORPORATION**
**Ibaraki-shi, Osaka 567-8680 (JP)**

(72) Inventors:
- **Kataoka, Kenichi**
**Osaka, 567-8680 (JP)**
- **Amano, Tatsumi**
**Osaka, 567-8680 (JP)**

(74) Representative: **Potter Clarkson LLP**
**The Belgrave Centre**
**Talbot Street**
**Nottingham**
**NG1 5GG (GB)**


(54) **Pressure-sensitive adhesive composition, pressure-sensitive adhesive sheet, and optical member**


(57) The present invention provides a pressure-sensitive adhesive composition which can form a pressure-sensitive sheet excellent in adhesive properties (adherability, easy peeling property at the time of high speed peeling, and re-peeling property) and the antistatic property and which has long pot life. The pressure-sensitive composition of the present invention is a pressure-sensitive adhesive composition comprising a (meth)acryl-based polymer composed of, as raw material monomers, a (meth) acryl-based monomer having an alkyl group of 1 to 14 carbon atoms and a hydroxyl group-containing (meth) acryl-based monomer, an alkali metal salt, and a catalyst having iron as an active center, wherein the hydroxyl group-containing (meth)acryl-based monomer is contained in an amount of 6 parts by weight or more to 100 parts by weight of the (meth) acryl-based monomer having an alkyl group of 1 to 14 carbon atoms.


Fig.1

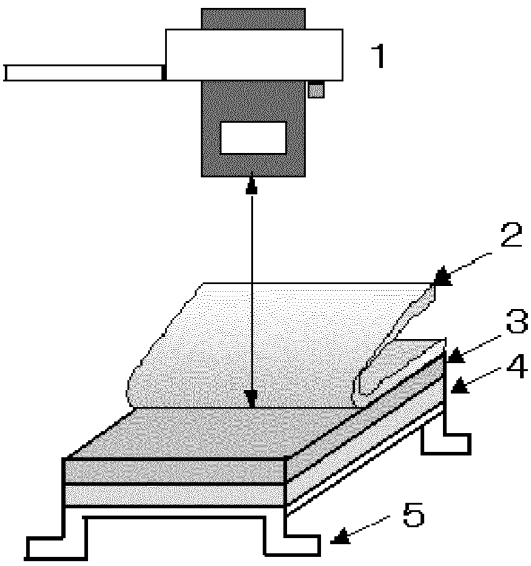


EP 2 647 683 A2

## Description

### Field of the Invention

The present invention relates to a pressure-sensitive adhesive composition, a pressure-sensitive adhesive sheet, and an optical member.

The pressure-sensitive adhesive composition of the present invention is applicable to a pressure-sensitive adhesive sheet (surface protecting film) for the purpose of protecting the surface of an optical member for use in a liquid crystal display, such as a polarizing plate, a wave plate, a retardation plate, an optical compensation film, a reflective sheet, or a brightness enhancement film, and therefore, it is useful.

### Description of the Related Art

In recent years, for transportation of optical or electronic components or mounting of optical or electronic components on printed boards, each component is often packed with a given sheet, or a pressure-sensitive adhesive tape is often bonded to each component, before transfer. In particular, surface protecting films are widely used in the field of optical or electronic components.

A surface protecting film is generally used for the purpose of preventing a scratch or a stain produced during processing or conveyance of an adherend by being bonded to the adherend with a pressure- sensitive adhesive applied onto a substrate side (JP- A- 9- 165460) . For example, a panel of a liquid crystal display is formed by bonding optical members such as a polarizing plate and a wave plate to a liquid crystal cell with a pressure- sensitive adhesive. These optical members are bonded with the surface protecting film with a pressure- sensitive adhesive interposed therebetween, and thus an adherend is protected from a scratch or a stain produced during processing or conveyance. The surface protecting film is peeled and removed when it becomes unnecessary.

In general, surface protecting films and optical members are made of plastic materials and therefore have highly electrical insulating properties and generate static electricity when being rubbed or peeled off. Therefore, static electricity is generated even when a surface protecting film is peeled off from an optical member such as a polarizing plate, and if a voltage is applied to a liquid crystal cell in such a state that the generated static electricity still remains, the orientation of the liquid crystal molecules may be degraded, or defects may be produced in the panel.

The presence of static electricity can create a risk of attracting dust and dirt and a risk of lowering workability.

The surface protecting film is peeled and removed when it becomes unnecessary, and along with upsizing and thinning of a liquid crystal display panel, damages to a polarizing plate and a liquid crystal cell are likely to arise during a peeling step. It is therefore required to ensure easy peeling during peeling at high speed.

For the easy peeling property, it is required for a pressure-sensitive adhesive layer to increase the cohesive strength and to be a highly crosslinked pressure-sensitive adhesive layer. Since crosslinking is a chemical reaction, crosslinking proceeds with the lapse of time and it takes time to stabilize the reaction. The adhesion is also changed along with the advance of crosslinking. Therefore, it is required to complete the crosslinking reaction quickly. Consequently, in the case of a combination of, for example, an acryl-based copolymer having a hydroxyl group and an isocyanate type crosslinking agent, a metal catalyst such as a tin (Sn) compound has conventionally been used. However, in terms of environmental awareness, use of specified metals tends to be legally regulated and considered to be a concern.

A pressure-sensitive adhesive composition for forming a pressure-sensitive adhesive layer is sometimes preserved as it is for a prescribed period depending on the production plan and in this stage, crosslinking may sometimes proceed. If crosslinking of the pressure-sensitive adhesive composition proceeds, the viscosity of the pressure-sensitive adhesive composition is increased or insoluble matter is produced and in formation of a pressure-sensitive adhesive layer thereafter, it becomes a cause to roughen the pressure-sensitive adhesive surface and thickness unevenness. Consequently, it is desired to obtain a pressure-sensitive adhesive composition in which no crosslinking proceeds in the composition state; that is, so-called pot life is sufficiently long; and in which crosslinking quickly proceeds in the case of forming a pressure-sensitive adhesive layer.

[Patent publication 1] JP- A- 09- 165460

### SUMMARY OF THE INVENTION

To solve the problems of the conventional pressure-sensitive adhesive sheet, an object of the present invention is to provide a pressure-sensitive adhesive composition which can form a pressure-sensitive sheet excellent in adhesive properties (adherability, easy peeling property at the time of high speed peeling, and re-peeling property) and the antistatic property and which has long pot life, and a pressure-sensitive sheet excellent in the antistatic property.

The inventors of the present invention made various investigations to achieve the above-mentioned object and have found that a pressure-sensitive adhesive composition containing a specified (meth) acryl-basedpolymer produced

from raw material monomers with a specified composition, an alkali metal salt, and a catalyst having iron as an active center as constituent components can form a pressure-sensitive adhesive sheet excellent in pot life, the antistatic property, and adhesive properties (adherability, easy peeling property at the time of high speed peeling, and re-peeling property) and the finding has now led to completion of the present invention.

That is, the pressure- sensitive adhesive composition of the present invention is a pressure- sensitive adhesive composition containing a (meth) acryl- based polymer composed of, as raw material monomers, a (meth) acryl- based monomer having an alkyl group of 1 to 14 carbon atoms and a hydroxyl group- containing (meth) acryl- based monomer, an alkali metal salt, and a catalyst containing iron as an active center and is characterized in that 6 parts by weight or more of the hydroxyl group- containing (meth) acryl- based monomer is contained to 100 parts by weight of the (meth) acryl- based monomer having an alkyl group of 1 to 14 carbon atoms.

In the pressure-sensitive adhesive composition of the present invention, the alkali metal salt is preferably a lithium salt.

The pressure-sensitive adhesive composition of the present invention preferably contains an organopolysiloxane having an oxylalkylene group.

The pressure- sensitive adhesive composition of the present invention preferably contains 0.01 to 10 parts by weight of a crosslinking agent to 100 parts by weight of the (meth) acryl- based polymer.

In the pressure- sensitive adhesive composition of the present invention, the (meth) acryl- based polymer preferably contains a carboxyl group- containing (meth) acryl- based monomer as an additional raw material monomer.

The pressure-sensitive adhesive sheet of the present invention is a pressure-sensitive adhesive sheet having a pressure-sensitive adhesive layer formed on at least one surface of a substrate by crosslinking the pressure-sensitive adhesive composition and preferably has an adhesion of 2.2 N/25 mm or less to a TAC polarizing plate at peeling rate of 30 m/min.

The pressure-sensitive adhesive sheet of the present invention is a pressure-sensitive adhesive sheet having a pressure-sensitive adhesive layer and is characterized in that the pressure-sensitive adhesive layer contains an alkali metal salt and iron atoms and has an adhesion of 2.2 N/25 mm or less to a TAC polarizing plate at peeling rate of 30 m/min.

The pressure-sensitive adhesive sheet of the present invention preferably has an iron atom content of 1 to 1500 ppm in the pressure-sensitive adhesive layer.

The optical member of the present invention is preferably protected by the pressure-sensitive adhesive sheet.

Since containing a specified (meth) acryl- based polymer, an alkali metal salt, and a catalyst containing iron as an active center, the pressure- sensitive adhesive composition (solution) of the present invention is excellent in pot life, and furthermore, the pressure- sensitive adhesive sheet (pressure- sensitive adhesive layer) produced from the pressure- sensitive adhesive composition has excellent adhesive properties (adherability and re- peeling property) and the antistatic property. The pressure- sensitive adhesive sheet of the present invention is useful for a purpose of surface protection of an optical film or the like.

## BRIEF DESCRIPTION OF THE DRAWING

Fig. 1 is a schematic drawing of potential measurement part.

## DETAILED DESCRIPTION OF THE PREFERRED EMBODIMENTS

Hereinafter, embodiments of the present invention will be described in detail.

### (Meth)acryl-based polymer

The pressure- sensitive adhesive composition of the present invention is characterized by containing, as raw material monomers, at least a (meth) acryl- based monomer having an alkyl group of 1 to 14 carbon atoms and a hydroxyl group- containing (meth) acryl- based monomer. Use of the (meth) acryl- based monomer having an alkyl group of 1 to 14 carbon atoms makes it easy to control of the adhesion to an adherend (object to be protected) to be low and gives excellent easy peeling property and re- peeling property, and use of the hydroxyl group- containing (meth) acryl- based monomer makes it easy to control crosslinking and thus it is a preferable embodiment. The (meth) acryl- based polymer in the present invention refers to an acryl- based polymer and/or a methacryl- based polymer and the (meth) acrylate refers to an acrylate and/or a methacrylate.

The pressure- sensitive adhesive composition of the present invention contains the (meth) acryl- based polymer produced by using a (meth) acryl- based monomer having an alkyl group of 1 to 14 carbon atoms and preferably a (meth) acryl- based monomer having an alkyl group of 6 to 14 carbon atoms as a main component of raw material monomers.

One or more kinds of (meth) acryl- based monomers may be used as a main component.

Specific examples of the (meth) acryl- based monomer having an alkyl group of 1 to 14 carbon atoms include methyl (meth) acrylate, ethyl (meth) acrylate, n- butyl (meth) acrylate, s- butyl (meth) acrylate, t- butyl (meth) acrylate, isobutyl (meth) acrylate, hexyl (meth) acrylate, 2- ethylhexyl (meth) acrylate, n- octyl (meth) acrylate, isooctyl (meth) acrylate, n- nonyl (meth) acrylate, isononyl (meth) acrylate, n- decyl (meth) acrylate, isodecyl (meth) acrylate, n- dodecyl (meth) acrylate, n- tridecyl (meth) acrylate, and n- tetradecyl (meth) acrylate.

Particularly when the pressure- sensitive adhesive sheet of the present invention is for use as a surface protecting film, preferred examples include (meth) acrylates having an alkyl group of 6 to 14 carbon atoms, such as hexyl (meth) acrylate, 2- ethylhexyl (meth) acrylate, n- octyl (meth) acrylate, isooctyl (meth) acrylate, n- nonyl (meth) acrylate, isononyl (meth) acrylate, n- decyl (meth) acrylate, isodecyl (meth) acrylate, n- dodecyl (meth) acrylate, n- tridecyl (meth) acrylate, n- tetradecyl (meth) acrylate and the like. The use of a (meth) acrylate having an alkyl group of 6 to 14 carbon atoms makes it easy to control the adhesion to the adherend at a low level, so that excellent re- peeling property is achieved.

The content of the (meth) acryl-basedmonomer having an alkyl group of 1 to 14 carbon atoms in the total amount 100 wt.% of the monomer components composing the (meth) acryl-based polymer is preferably 50 wt.% or more, more preferably 60 wt.% or more, furthermore preferably 70 wt.%, and most preferably 85 to 97 wt.%. If it is less than 50 wt.%, proper wettability and cohesive strength of the pressure-sensitive adhesive composition are lowered and thus it is not preferable.

The pressure- sensitive adhesive composition of the present invention contains the (meth) acryl- based polymer produced by using a hydroxyl group- containing (meth) acryl- based monomer as a raw material monomer. One or more kinds of the hydroxyl group- containing (meth) acryl- based monomers may be used as a main component.

Use of the hydroxyl group- containing (meth) acryl- based monomer makes control of crosslinking of the pressure- sensitive adhesive composition easy and consequently improves the controllability of balance between the improvement of wettability owing to fluidity and the decrease of the adhesion (adhering strength) at the time of peeling. Further, since different from the carboxyl group and a sulfonate group which are generally reactive as a crosslinking site, a hydroxyl group properly interacts with an alkali metal salt and an organopolysiloxane having an oxyalkylene group, the hydroxyl group- containing (meth) acryl- based monomer can be used preferably in terms of antistatic property.

Examples of the hydroxyl group- containing (meth) acryl- based monomer include 2- hydroxyethyl (meth) acrylate, 2- hydroxypropyl (meth) acrylate, 4- hydroxybutyl (meth) acrylate, 6- hydroxyhexyl (meth) acrylate, 8- hydroxyoctyl (meth) acrylate, 10- hydroxydecyl (meth) acrylate, 12- hydroxylauryl (meth) acrylate, (4- hydroxymethylcyclohexyl) methyl acrylate, N- methylol (meth) acrylamide, vinyl alcohol, allyl alcohol, 2- hydroxyethyl vinyl ether, 4- hydroxybutyl vinyl ether, and diethylene glycol monovinyl ether.

The content of the hydroxyl group- containing (meth) acryl- based monomer to 100 parts by weight of the (meth) acryl- based monomer having an alkyl group of 1 to 14 carbon atoms is 6 parts by weight or more, preferably 6 to 15 parts by weight, and more preferably 6 to 12 parts by weight. If it is less than 6 parts by weight, although a reason for that is not clear in detail, when using a catalyst having iron as an active center and an alkali metal salt together with the (meth) acryl- based polymer, progress of the crosslinking reaction is worsened and the adhesion becomes high at the time of high speed peeling and it tends to be difficult to carry out peeling lightly and so it is not preferable.

As for other polymerizable monomer components, polymerizable monomers for controlling the glass transition temperature (Tg) or peeling properties of the (meth) acryl- based polymer so that the Tg can be 0°C or lower (generally-100°C or higher) may be used in terms of easy balancing of adhesive performance, as long as the effects of the present invention are not reduced.

A carboxyl group- containing (meth) acryl- based monomer may be used as another polymerizable monomer other than the (meth) acryl- based monomer having an alkyl group of 1 to 14 carbon atoms and the hydroxyl group-containing (meth) acryl- based monomer to be used for the (meth) acryl- based polymer.

Examples of the carboxyl group- containing (meth) acryl- based monomer include (meth) acrylic acid.

The content of the carboxyl group- containing (meth) acryl- based monomer to 100 parts by weight of the (meth) acryl- based monomer having an alkyl group of 1 to 14 carbon atoms is preferably 2 parts by weight or less and more preferably 1 part by weight or less. If it exceeds 2 parts by weight, a large number of acidic functional groups such as a carboxyl group with high polar action exist, and the acidic functional groups such as a carboxyl group cause interaction with an alkali metal salt to be added as an antistatic agent so that ion conduction is disturbed, the conductivity is lowered, and it may possibly become impossible to obtain sufficient antistatic property and therefore, it is not preferable.

Another polymerizable monomer other than the (meth) acryl- based monomer having an alkyl group of 1 to 14 carbon atoms, the hydroxyl group- containing (meth) acryl- based monomer, and the carboxyl group- containing (meth) acryl- based monomer to be used for the (meth) acryl- based polymer is not particularly limited as long as the characteristics of the present invention are not adversely affected. Examples of those used properly include components for improving cohesive strength and heat resistance such as cyano group- containing monomers, vinyl ester monomers, and aromatic vinyl monomers and components having a functional group for improving adhesion (adhering strength)

and working as a crosslinking base point, such as an amide group- containing monomer, an imide group- containing monomer, an amino group- containing monomer, an epoxy group- containing monomer, N- acryloylmorpholine, and a vinyl ether monomer. These polymerizable monomers may be used alone or in form of a mixture of two or more thereof.

Examples of the cyano group-containing monomer include acrylonitrile and methacrylonitrile.

Examples of vinylesters include vinyl acetate, vinyl propionate, and vinyl laurate.

Examples of the aromatic vinyl compound include styrene, chlorostyrene, chloromethylstyrene, $\alpha$-methylstyrene, and other substituted styrene.

Examples of the amido group-containing monomer include acrylamide, methacrylamide, diethylacrylamide, N-vinylpyrrolidone, N, N-dimethylacrylamide, N, N-dimethylmethacrylamide, N, N-diethylacrylamide, N, N-diethylmethacrylamide, N, N'-methylenebisacrylamide, N, N-dimethylaminopropylacrylamide, N, N-dimethylaminopropylmethacrylamide, and diacetoneacrylamide.

Examples of the imido group-containing monomer include cyclohexylmaleimide, isopropylmaleimide, N-cyclohexylmaleimide, and itaconeimide.

Examples of the amino group- containing monomer include aminoethyl (meth) acrylate, N, N- dimethylaminoethyl (meth) acrylate, and N, N- dimethylaminopropyl (meth) acrylate.

Examples of the epoxy group- containing monomer include glycidyl (meth) acrylate, methylglycidyl (meth) acrylate, and allyl glycidyl ether.

Examples of vinyl ethers include methyl vinyl ether, ethyl vinyl ether, and isobutyl vinyl ether.

In the present invention, the content of the polymerizable monomer other than the (meth) acryl- based monomer having an alkyl group of 1 to 14 carbon atoms, the hydroxyl group- containing (meth) acryl- based monomer, and the carboxyl group- containing (meth) acryl- based monomer is preferably 0 to 40 parts by weight and more preferably 0 to 30 parts by weight to 100 parts by weight of the (meth) acryl- based monomer having an alkyl group of 1 to 14 carbon atoms. Use of another polymerizable monomer within the above- mentioned range makes it possible to properly adjust good interaction with an alkali metal salt to be used as an antistatic agent and good re- peeling property.

The (meth) acryl- based polymer has a weight average molecular weight of 100, 000 to 5, 000, 000, preferably 200, 000 to 4, 000, 000, and more preferably 300, 000 to 3, 000, 000. If the weight average molecular weight is less than 100, 000, there is tendency that adhesive residue is generated due to reduction in the cohesive strength of the pressure- sensitive adhesive composition. On the other hand, if the weight average molecular weight exceeds 5, 000, 000, there is a tendency that fluidity of the polymer is reduced, wettability to a polarizing plate becomes insufficient, and that blistering may be caused between a polarizing plate and a pressure- sensitive adhesive composition layer of a pressure- sensitive adhesive sheet. The weight average molecular weight is a value measured by GPC (gel permeation chromatography) .

The glass transition temperature (Tg) of the (meth) acryl- based polymer is preferably 0°C or lower and more preferably- 10°C or lower (usually- 100°C or higher) . If the glass transition temperature is higher than 0°C, a polymer does not easily flow and wettability on a polarizing plate becomes insufficient and thus, there is a tendency that blistering may be generated between a polarizing plate and a pressure- sensitive adhesive composition layer of a pressure-sensitive adhesive sheet. In particular, adjustment of the glass transition temperature to- 61°C or lower makes it easy to obtain a pressure- sensitive adhesive composition excellent in wettability to a polarizing plate and easy peeling property. The glass transition temperature of the (meth) acryl- based polymer can be adjusted within the above- mentioned range by appropriately varying the monomer components to be used and the composition ratio.

A polymerization method for the (meth) acryl- based polymer used in the present invention is not particularly limited and any conventionally known polymerization method such as solution polymerization, emulsion polymerization, bulk polymerization, and suspension polymerization may be employed for the polymerization. The solution polymerization is a more preferred embodiment particularly in view of the workability and specific characteristic aspects such as low staining to an adherend (object to be protected) . The obtained polymer may be any one selected from a random copolymer, a block copolymer, an alternate copolymer, a graft copolymer and others.

Alkali metal salts

The pressure-sensitive adhesive composition of the present invention is characterized by containing an alkali metal salt. Addition of an alkali metal salt can provide an excellent antistatic property.

It is preferred that the alkali metal salt exhibits excellent antistatic properties even in case of adding a trace amount because of its high ionic dissociation. It is possible to suitably use, as the alkali metal salt, for example, a metal salt composed of cations of $Li^+$, $Na^+$ and $K^+$, and anions of $Cl^-$, $Br^-$, $I^-$, $AlCl_4^-$, $Al_2Cl_7^-$, $BF_4^-$, $PF_6^-$, $SCN^-$, $ClO_4^-$, $NO_3^-$, $CH_3COO^-$, $CgH_{19}COO^-$, $CF_3COO^-$, $C_3F_7COO^-$, $CH_3SO3^-$, $CF_3SO3^-$, $C_9F_9SO_3^-$, $C_2H_5OSO3^-$, $C_6H_{13}OSO_3^-$, $C_8H_{17}OSO_3^-$, $(CF_3SO_2)$ $2N^-$, $(C_2F_5SO_2)_2N^-$, $(C_3F_7SO_2)_2N^-$, $(C_4F_9S_{O2})_2N^-$, $(CF_3SO_2)_3C^-$, $AsF_6^-$, $SbF_6^-$, $NbF_6^-$, $TaF_6^-$, F $(HF)_n^-$, (CN) $2N^-$, $(CF_3SO_2)$ $(CF_3CO)$ $N^-$, $(CH_3)_2PO_4^-$, $(C_2H_5)_2PO_4^-$, $CH_3$ $(OC_2H_4)_2OSO_3^-$, $C_6H_4$ $(CH_3)$ $SO_3^-$, $(C_2F_5)$ $3PF3^-$, $CH_3CH$ (OH) $COO^-$ and $(FSO_2)_2N^-$.

Use of a lithium salt and a potassium salt as the alkali metal salt is a more preferable embodiment and a lithium salt is more preferable. Above all, preferable examples of those include lithium salts such as LiBr, LiI, $LiBF_4$, $LiPF_6$, LiSCN, $LiClO_4$, $LiCF_3SO_3$, Li $(CF_3SO_2)_2N$, Li $(C_2F_5SO_2)_2N$, Li $(FSO_2)_2N$, and Li $(CF_3SO_2)_3C$, and particularly preferable examples of those include lithium salts such as $LiCF_3SO_3$, Li $(CF_3SO_2)\ _2N$, Li $(C_2F_5SO_2)\ _2N$, Li $(C_3F_7SO_2)\ _2N$, Li $(C_4F_9SO_2)\ _2N$, and Li $(FSO_2)\ _2N$, Li $(CF_3SO_2)\ _3C$. These alkali metal salts may be used alone or in form of a mixture of two or more thereof.

The content of the alkali metal salt is preferably 1 part by weight or less, more preferably 0.001 to 0.9 parts by weight, and furthermore preferably 0.005 to 0.8 parts by weight to 100 parts by weight of the (meth) acryl- based polymer. It is preferred that the content is within the above- mentioned range since it is easy to achieve both antistatic property and low staining property.

Catalyst having iron as active center

The pressure- sensitive adhesive composition of the present invention is characterized by containing a catalyst having iron as an active center. A tin (Sn) catalyst, which is usually used in the case of preparing an acrylic pressure-sensitive adhesive composition (solution), ishighlytoxic, andtherefore, notusing such a catalyst in future is a preferred aspect in terms of global environments.

Any conventionally known catalyst having iron as an active center can be used without limitation, and examples of those include tris (acetylacetonato) iron, tris (hexane- 2, 4- dionato) iron, tris (heptane- 2, 4- dionato) iron, tris (heptane-3, 5- dionato) iron, tris (5- methylhexane- 2, 4- dionato) iron, tris (octane- 2, 4- dionato) iron, tris (6- methylheptane- 2, 4- dionato) iron, tris (2, 6- dimethylheptane- 3, 5- dionato) iron, tris (nonane- 2, 4- dionato) iron, tris (nonane- 4, 6- dionato) iron, tris (2, 2, 6, 6- tetramethylheptane- 3, 5- dionato) iron, tris (tridecane- 6, 8- dionato) iron, tris (1- phenylbutane- 1, 3- dionato) iron, tris (hexafluoroacetylacetonato) iron, tris (acetoacetic acid ethyl ester) iron, tris (acetoacetic acid- n-propyl ester) iron, tris (acetoacetic acid isopropyl ester) iron, tris (acetoacetic acid- n- butyl ester) iron, tris (acetoacetic acid sec- butyl ester) iron, tris (acetoacetic acid- tert- butyl ester) iron, tris (propionylacetic acid methyl ester) iron, tris (propionylacetic acid ethyl ester) iron, tris (propionylacetic acid- n- propyl ester) iron, tris (propionylacetic acid isopropyl ester) iron, tris (propionylacetic acid- n- butyl ester) iron, tris (propionylacetic acid sec- butyl ester) iron, tris (propionylacetic acid tert- butyl ester) iron, tris (benzylacetoacetated) iron, tris (malonic acid dimethyl ester) iron, tris (malonic acid diethyl ester) iron, trimethoxyiron, triethoxyiron, triisopropoxyiron, and ferric chloride. These catalysts having iron as an active center may be used alone or in form of a mixture of two or more thereof.

The content of the catalyst having iron as an active center is preferably 1 part by weight or less, more preferably 0.001 to 0.5 parts by weight and furthermore preferably 0.002 to 0.2 parts by weight to 100 parts by weight of the (meth) acryl-based polymer. If it is within the above-mentioned range, the crosslinking reaction speed is high at the time of forming the pressure-sensitive adhesive layer and the pot life of the pressure-sensitive adhesive composition is prolonged, resulting in a preferable embodiment.

Organopolysiloxane having an oxyalkylene group

The pressure-sensitive adhesive composition of the present invention preferably contains an organopolysiloxane having an oxyalkylene group. It is supposed that use of the organopolysiloxane decreases the surface free energy of the pressure-sensitive adhesive surface and makes easy peeling at the time of high speed peeling possible.

Any known organopolysiloxanes having an oxyalkylene group (a polyoxyalkylene chain) as a main chain may be used properly as the organopolysiloxane and examples used preferably are those defined by the following formula.

[Formula 1]

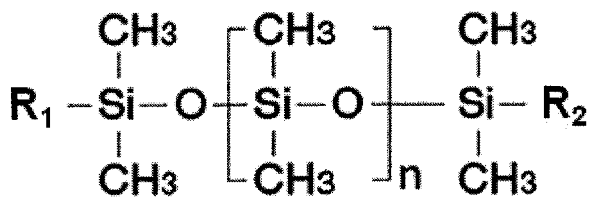

(wherein $R_1$ and/or $R_2$ have/has an oxyalkylene chain of 1 to 6 carbon atoms; an alkylene group in the oxyalkylene chain may be a straight or branched chain; the oxyalkylene chain may have an alkoxy group or a hydroxyl group at the terminal; either $R_1$ or $R_2$ may be a hydroxyl group or an alkyl group or an alkoxy group; the alkyl group and the alkoxy group may

be functional groups partially substituted with a heteroatom; and n is an integer of 1 to 300).

The organopolysiloxane used is an organopolysiloxane in which a moiety containing siloxane (siloxane moiety) is a main chain and an oxyalkylene chain is bonded to the terminal of the main chain. It is supposed that use of the organosiloxane having the oxyalkylene chain in the main chain makes it possible to keep balance of compatibility between the (meth) acryl- based polymer and the alkali metal salt and makes peeling easy.

Examples of the organopolysiloxane in the present invention are those with the following constitution. Specifically, $R_1$ and/or $R_2$ in the formula has an oxyalkylene chain containing a hydrocarbon group of 1 to 6 carbon atoms, and examples of the oxyalkylene chain include an oxymethylene group, an oxyethylene group, an oxypropylene group, and an oxybutylene group. In particular, an oxyethylene group and an oxypropylene group are preferable. When both $R_1$ and $R_2$ have an oxyalkylene chain, they may be same or different.

[Formula 2]

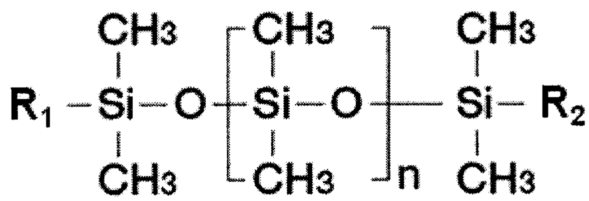

The hydrocarbon group of the oxyalkylene chain may be a straight or branched chain.

The terminal of the oxyalkylene chain may be either an al koxy group or a hydroxyl group and is especially preferably an alkoxy group. In the case a separator is bonded to the surface of a pressure-sensitive adhesive layer for the purpose of protecting the pressure-sensitive surface, use of an organopolysiloxane having a hydroxyl group at the terminal causes an interaction with the separator and may possibly increase the peeling force at the time of peeling the separator off the surface of the pressure-sensitive adhesive layer.

The reference character n denotes an integer of 1 to 300, preferably 10 to 200, and more preferably from 20 to 150. If n is within the above- mentioned range, compatibility with the (meth) acryl- based polymer, which is a base polymer, can be balanced well, resulting in a preferred embodiment. It is also possible to have a reactive substituent group such as a (meth) acryloyl group, an allyl group, or a hydroxyl group in the molecule. The organopolysiloxane may be used alone or in form of a mixture of two or more thereof.

Specific examples of the organopolysiloxane having the oxyalkylene chain include commercially available products such as X-22-4952, X-22-4272, X-22-6266, KF-6004, and KF-889 (all manufactured by Shin-Etsu Chemical Co., Ltd.), BY16-201 and SF8427 (both manufactured by Dow Corning Toray Co. , Ltd.), and IM22 (manufactured by Wacker Asahikasei Silicone Co., Ltd.). These compounds may be used alone or in form of a mixture of two or more thereof.

It is also possible to use an organosiloxane having (bonded to) an oxyalkylene chain as a side chain other than the organosiloxane having (bonded to) an oxyalkylene group (a polyoxyalkylene chain) as a main chain, and use of an organosiloxane having an oxyalkylene chain in a side chain rather than in a main chain is a more preferable embodiment. A conventionally known organopolysiloxane having an oxyalkylene group (a polyoxyalkylene chain) in the side chain may be used properly as the organopolysiloxane, and those defined by the following formula are preferable.

[Formula 3]

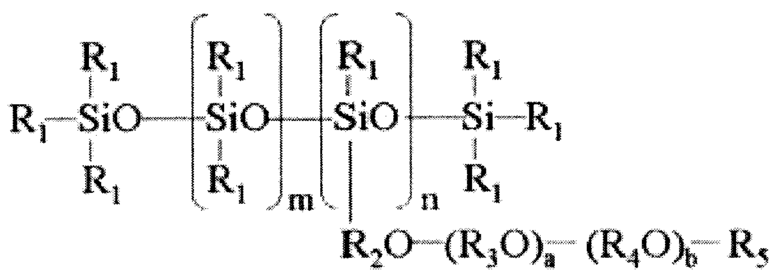

(wherein $R_1$ is a monovalent organic group; $R_2$, $R_3$ and $R_4$ are an alkylene group; $R_5$ is a hydroxyl group or an organic

group; m and n are an integer of 0 to 1000 and are not simultaneously 0; and a and b are an integer of 0 to 100 and are not simultaneously 0).

Those used as the organopolysiloxane in the present invention have the following constitution, for example. Specifically, in the formula, $R_1$ is a monovalent organic group, e.g., an alkyl group such as a methyl group, an ethyl group, and a propyl group; an aryl group such as a phenyl group or a tolyl group; or an aralkyl group such as a benzyl group and a phenethyl group, all of which may have a substituent such as a hydroxyl group. $R_2$, $R_3$, and $R_4$ may be an alkylene group of 1 to 8 carbon atoms such as a methylene group, an ethylene group, or a propylene group. In addition, $R_3$ and $R_4$ are different alkylene groups and $R_2$ may be same as or different from $R_3$ or $R_4$. Either one of $R_3$ and $R_4$ is preferably an ethylene group or a propylene group in order to increase the concentration of an alkali metal salt soluble in the oxyalkylene side chain of the organopolysiloxane. $R_5$ may be a monovalent organic group, e.g., an alkyl group such as a methyl group, an ethyl group or a propyl group; or an acyl group such as an acetyl group or a propionyl group which may respectively have a substituent such as a hydroxyl group. These compounds may be used alone or in form of a mixture of two or more thereof. These compounds may have a reactive substituent such as a (meth)acryloyl group, an allyl group, or a hydroxyl group in the molecule. An organosiloxane having a polyoxyalkylene side chain having a hydroxyl group at the terminal is particularly preferable among the organosiloxanes having a polyoxyalkylene side chain since it is supposed that the compatibility can be easily well balanced.

[Formula 4]

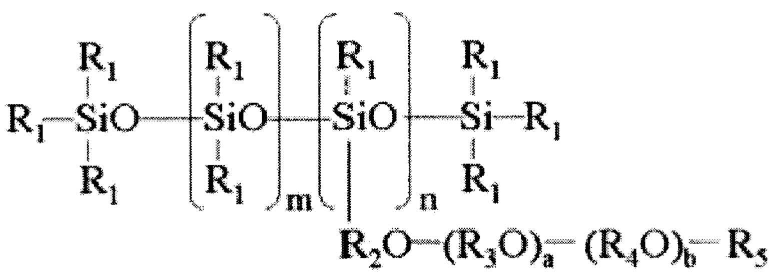

Specific examples of the organosiloxane include commercially available products such as KF-351A, KF-352A, KF-353, KF-354L, KF-355A, KF-615A, KF-945, KF-640, KF-642, KF-643, KF-6022, X-22-6191, X-22-4515, KF-6011, KF-6012, KF-6015, KF-6017, and X-22-2516 (all manufactured by Shin-Etsu Chemical Co., Ltd.); SF8428, FZ-2162, SH3749, FZ-77, L-7001, FZ-2104, FZ-2110, L-7002, FZ-2122, FZ-2164, FZ-2203, FZ-7001, SH8400, SH8700, SF8410, and SF8422 (all manufactured by Dow Corning Toray Co., Ltd.); TSF-4440, TSF-4441, TSF-4445, TSF-4450, TSF-4446, TSF-4452, TSF-4460 (all manufactured by Momentive Performance MaterialsInc.); and BYK-333, BYK-307, BYK-377, BYK-UV3500, and BYK-UV3570 (all manufactured by BYK Japan KK). These compounds may be used alone or in form of a mixture of two or more thereof.

The organosiloxane used in the present invention has an HLB (Hydrophile-Lipophile Balance) value of preferably 1 to 16 and more preferably 3 to 14. If the HLB value is out of the range, the staining property to the adherend is worsened and therefore, it is not preferable.

The content of the organopolysiloxane to 100 parts by weight of the (meth) acryl- based polymer is preferably 0.01 to 5 parts by weight, more preferably 0.03 to 3 parts by weight, and furthermore preferably 0.05 to 1 part by weight. It is preferred that the content is within the above- mentioned range since it is easy to achieve both antistatic property and easy peeling (re- peeling) property.

Crosslinking agent

The pressure- sensitive adhesive composition of the present invention preferably contains a crosslinking agent. In the present invention, the pressure- sensitive adhesive composition is used for forming a pressure- sensitive adhesive layer. By appropriately adjusting the structural units and the component ratio of the (meth) acryl- based polymer, selection of the crosslinking agent, and the addition ratio of the crosslinking agent and performing crosslinking, a pressure- sensitive adhesive sheet (pressure- sensitive adhesive layer) with more excellent heat resistance can be obtained.

The crosslinking agent used in the present invention may be an isocyanate compound, an epoxy compound, a melamine resin, an aziridine derivative, a metal chelate compound or the like. In particular, use of an isocyanate compound is a preferable embodiment. These compounds may be used alone or in form of a mixture of two or more thereof.

Examples of the isocyanate compound include aliphatic polyisocyanates such as trimethylene diisocyanate,

butylene diisocyanate, hexamethylene diisocyanate (HDI), and dimer acid diisocyanate; aliphatic isocyanates such as cyclopentylene diisocyanate, cyclohexylene diisocyanate, and isophorone diisocyanate (IPDI) ; aromatic isocyanates such as 2, 4- tolylene diisocyanate, 4, 4'- diphenylmethanediisocyanate, and xylylene diisocyanate (XDI) ; and modified polyisocyanates obtained by modifying the above- mentioned isocyanate compounds by allophanate bonding, biuret bonding, isocyanurate bonding, uretdione bonding, urea bonding, carbodiimide bonding, uretonimine bonding, oxadiazinetrione bonding, and the like. For example, commercially available products such as TAKENATE 300S, TAKENATE 500, TAKENATE D165N, and TAKENATE D178N (all manufactured by Takeda Pharmaceutical Co., Ltd.), Sumidur T80, SumidurL, and Desmodur N3400 (all manufactured by Sumitomo Bayer Urethane Co. , Ltd.) ; and Millionate MR, Millionate MT, Coronate L, Coronate HL, and Coronate HX (all manufactured by Nippon Polyurethane Industry Co., Ltd.) can be mentioned. These isocyanate compounds may be used alone or in form of a mixture of two or more thereof. It is also possible to use a bifunctional isocyanate compound and a tri- or higher functional isocyanate compound in combination. Combination use of crosslinking agents makes it possible to achieve both pressure- sensitive adhesive property and resilient resistance (adherability to a curved face) and to obtain a pressure- sensitive adhesive sheet more excellent in adhesion reliability.

Examples of the epoxy compound include N, N, N', N'- tetraglycidyl- m- xylenediamine (trade name TETRAD-X, manufactured by Mitsubishi Gas Chemical Company, Inc.) and 1, 3- bis (N, N- diglycidylaminomethyl) cyclohexane (trade name TETRAD- C, manufactured by Mitsubishi Gas Chemical Company, Inc.) .

Examples of the melamine resin include hexamethylolmelamine. Examples of the aziridine derivative include commercially available products such as HDU, TAZM, and TAZO (all manufactured by Sogo Pharmaceutical Co., Ltd.).

Metal chelate compounds include a metal component such as aluminum, iron, tin, titanium, nickel and a chelate component such as acetylene, methyl acetoacetate, and ethyl lactate.

The content of the crosslinking agent used in the present invention to 100 parts by weight of the (meth) acryl-based polymer is preferably 0.01 to 10 parts by weight, more preferably 0.1 to 8 parts by weight, furthermore preferably 0.2 to 5 parts by weight, and most preferably 0.4 to 3 parts by weight. If the content is less than 0. 01 parts by weight, the crosslinking agent may insufficiently form crosslinks, sothatthecohesivestrength of the pressure-sensitive adhesive composition may be low, which may make it impossible to obtain sufficient heat resistance in some cases and tend to cause adhesive residue. On the other hand, if the content is more than 10 parts by weight, the polymer may have a high cohesive strength to reduce fluidity, so that the wettability to a polarizing plate may be insufficient and it may tend to cause blistering between the polarizing plate and the pressure-sensitive adhesive composition layer (before crosslinking). Further, if the content of the crosslinking agent is high, the peeling electrification property tends to be deteriorated. These crosslinking agents may be used alone or in form of a mixture of two or more thereof.

The pressure-sensitive adhesive composition of the present invention may further contain a compound which causes keto-enol tautomerism. The compound which causes keto-enol tautomerism is a compound causing tautomerism between keto (ketone, aldehyde) and enol and reacts as a chelating agent on the catalyst having iron as an active center so that the pot life is prolonged and therefore, it is a preferable embodiment.

Examples of the compound which causes keto- enol tautomerism include methyl acetoacetate, ethyl acetoacetate, n- propyl acetoacetate, isopropyl acetoacetate, n- butyl acetoacetate, sec- butyl acetoacetate, tert- butyl acetoacetate, propionylacetic acid methyl ester, propionylacetic acid ethyl ester, propionylacetic acid n- propyl ester, propionylacetic acid isopropyl ester, propionylacetic acid n- butyl ester, propionylacetic acid sec- butyl ester, propionylacetic acid tert- butyl ester, benzyl acetoacetate, malonic acid dimethyl ester, malonic acid diethyl ester, acetylacetone, hexane-2, 4- dione, heptane- 2, 4- dione, heptane- 3, 5- dione, 5- methylhexane- 2, 4- dione, octane- 2, 4- dione, 6- methylheptane-2, 4- dione, 2, 6- dimethylheptane- 3, 5- dione, nonane- 2, 4- dione, nonane- 4, 6- dione, 2, 2, 6, 6- tetramethylheptane-3, 5- dione, tridecane- 6, 8- dione, 1- phenylbutane- 1, 3- dione, hexafluoroacetylacetone, acetone, methyl ethyl ketone, methyl n- butyl ketone, methyl isobutyl ketone, methyl tert- butyl ketone, methyl phenyl ketone, and cyclohexanone. These compounds may be used alone or in form of a mixture of two or more thereof.

The content of the compound which causes keto- enol tautomerism is preferably 25 parts by weight or less, more preferably 0.001 to 15 parts by weight, and furthermore preferably 0.01 to 5 parts by weight to 100 parts by weight of the (meth) acryl- based polymer. If it is within the above- mentioned range, the pot life of the pressure- sensitive adhesive composition is prolonged, resulting in a preferable embodiment.

The pressure-sensitive adhesive composition of the present invention may contain a polyoxyalkylene chain-containing compound containing no organopolysiloxane. If the pressure-sensitive adhesive composition contains the compound, it is possible to obtain a pressure-sensitive adhesive composition having more excellent wettability to the adherend.

Specific examples of the polyoxyalkylene chain-containing compound containing no organopolysiloxane include nonionic surfactants such as polyoxyalkylenealkylamine, polyoxyalkylenediamine, polyoxyalkylene fatty acid ester, polyoxyalkylenesorbitan fatty acid ester, polyoxyalkylene alkyl phenyl ether, polyoxyalkylene alkyl ether, polyoxyalkylene alkyl allyl ether, and polyoxyalkylene alkyl phenyl allyl ether; anionic surfactants such as polyoxyalkylene alkyl ether sulfuric acid ester salt, polyoxyalkylene alkyl ether phosphoric acid ester salt, polyoxyalkylene alkyl phenyl ether sulfuric

acid ester salt, and polyoxyalkylene alkyl phenyl ether phosphoric acid ester salt; cationic surfactants and amphoteric surfactants having a polyoxyalkylene chain (polyalkylene oxide chain), polyether compounds (including their derivatives) having a polyoxyalkylene chain, and acrylic compounds (including their derivatives) having a polyoxyalkylene chain. Further, a polyoxyalkylene chain-containing monomer may be added as the polyoxyalkylene chain-containing compound to an acryl-based polymer. These polyoxyalkylene chain-containing compounds may be used alone or in form of a mixture of two or more thereof.

Specific examples of the polyoxyalkylene chain- containing polyether compounds include polypropylene glycol (PPG)- polyethylene glycol (PEG) block copolymers, PPG- PEG- PPG block copolymers, and PEG- PPG- PEG block copolymers. Examples of the polyoxyalkylene chain- containing polyether compound derivatives include terminal- etherified oxypropylene group- containing compounds (PPG monoalkyl ether, PEG- PPG monoalkyl ether, etc.), and terminal- acetylated oxypropylene group- containing compounds (terminal- acetylated PPG, etc.) .

Specific examples of the polyoxyalkylene chain-containing acrylic compounds include oxyalkylene group-containing (meth)acrylate polymers. The number of moles added of an oxyalkylene unit for the oxyalkylene group is preferably 1 to 50, more preferably 2 to 30, and furthermore preferably 2 to 20 in terms of coordination of the alkali metal salt. The terminal of the oxyalkylene chain may be a hydroxyl group as it is or substituted with an alkyl group, a phenyl group, or the like.

The oxyalkylene group- containing (meth) acrylate polymers are preferably polymers containing (meth) acrylic acid alkylene oxide as a monomer unit (component) . Specific examples of the (meth) acrylic acid alkylene oxide include, as ethylene glycol group- containing (meth) acrylate, methoxy- polyethylene glycol (meth) acrylate types such as methoxy- diethylene glycol (meth) acrylate and methoxy- triethylene glycol (meth) acrylate; ethoxy- polyethylene glycol (meth) acrylate types such as ethoxy- diethyleneglycol (meth) acrylate and ethoxy- triethylene glycol (meth) acrylate; butoxy- polyethylene glycol (meth) acrylate types such as butoxy- diethylene glycol (meth) acrylate and butoxy- triethylene glycol (meth) acrylate; phenoxy- polyethylene glycol (meth) acrylate types such as phenoxy- diethylene glycol (meth) acrylate and phenoxy- triethylene glycol (meth) acrylate; 2- ethylhexyl- polyethylene glycol (meth) acrylate, nonylphenol- polyethylene glycol (meth) acrylate type, and methoxy- polypropylene glycol (meth) acrylate types such as methoxy- dipropylene glycol (meth) acrylate.

Other monomer units (components) other than the (meth) acrylic acid alkylene oxide may be used as the monomer unit (component) . Specific examples of other monomer unit include acrylates and/or methacrylate having an alkyl group of 1 to 14 carbon atoms such as methyl (meth) acrylate, ethyl (meth) acrylate, n- butyl (meth) acrylate, sec-butyl (meth) acrylate, tert- butyl (meth) acrylate, isobutyl (meth) acrylate, hexyl (meth) acrylate, 2- ethylhexyl (meth) acrylate, n- octyl (meth) acrylate, isooctyl (meth) acrylate, n- nonyl (meth) acrylate, isononyl (meth) acrylate, n- decyl (meth) acrylate, isodecyl (meth) acrylate, n- dodecyl (meth) acrylate, n- tridecyl (meth) acrylate, and n- tetradecyl (meth) acrylate.

Further, it is also possible to properly use, as the other monomer units (components) other than the (meth) acrylic acid alkylene oxide, carboxyl group- containing (meth) acrylate, phosphoric acid group- containing (meth) acrylate, cyano group- containing (meth) acrylate, vinyl esters, aromatic vinyl compounds, acid anhydride group- containing (meth) acrylate, hydroxyl group- containing (meth) acrylate, amide group- containing (meth) acrylate, amino group- containing (meth) acrylate, epoxy group- containing (meth) acrylate, N- acryloylmorpholine, and vinyl ethers.

In a preferred embodiment, the polyoxyalkylene chain-containing compound containing no organopolysiloxane is a compound which at least partially has a (poly) ethylene oxide chain. Addition of the (poly) ethylene oxide chain-containing compound improves compatibility between a base polymer and an antistatic component and suppresses bleeding to the adherend successfully and thus gives a pressure-sensitive adhesive composition with a low staining property. In particular, in the case of using a PPG-PEG-PPG block copolymer, a pressure-sensitive adhesive composition excellent in the low staining property can be obtained. In the polyethylene oxide chain-containing compound, the weight ratio of the (poly)ethylene oxide chain to the total weight of the polyoxyalkylene chain-containing compound is preferably 5 to 90 wt.%, more preferably 5 to 85 wt.%, furthermore preferably 5 to 80 wt.%, and most preferably 5 to 75 wt.%.

The polyoxyalkylene chain-containing compound containing no organopolysiloxane has a number average molecular weight (Mn) of suitably 50,000 or less, preferably 200 to 30,000, more preferably 200 to 10, 000, and even more preferably 200 to 5, 000. If Mn is excessively larger than 50,000, the compatibility with an acryl-based polymer tends to be lowered, resulting in whitening of the pressure-sensitive adhesive layer. If Mn is excessively smaller than 200, staining with the polyoxyalkylene compound may be likely to occur. Herein, Mn refers to a polystyrene-equivalent value measured by GPC (gel permeation chromatography).

Specific examples of commercially available products of the polyoxyalkylene chain-containing compound excluding an organopolysiloxane include ADEKA Pluronic 17R-4 and ADEKA Pluronic 25R-2 (both manufactured by ADEKA); and Emulgen 120 (manufactured by KAO Corporation).

The amount added of the polyoxyalkylene chain-containing compound containing no organopolysiloxane is preferably, for example, 0.01 to 5 parts by weight, more preferably 0.03 to 3 parts by weight, and furthermore preferably 0.05 to 1 part by weight to 100 parts by weight of the acryl-based polymer. If the amount added is too small, the effect

of preventing bleeding of an antistatic component may be lowered and on the other hand, if the amount added is too large, staining with the polyoxyalkylene compound may be likely to occur.

Further, the pressure- sensitive adhesive composition of the present invention may contain other conventionally known additives, for example, a powder of a coloring agent, a pigment or the like, a surfactant, a plasticizer, a tackifier, a low molecular weight polymer, a surface lubricant, a leveling agent, anantioxidant, acorrosionpreventingagent, aphotostabilizer, an ultraviolet absorbing agent, a polymerization inhibitor, a silane coupling agent, an inorganic or organic filler, a metal powder, granules, foils and others, according to utility.

Pressure-sensitive adhesive sheet

The pressure-sensitive adhesive sheet of the present invention preferably has a pressure-sensitive adhesive layer formed by crosslinking any one of the pressure-sensitive adhesive compositions described above on one or both surfaces of a substrate (supporting film or supporting body). Having the pressure-sensitive adhesive layer formed by crosslinking the pressure-sensitive adhesive composition with the advantageous effects described above, the pressure-sensitive adhesive sheet can prevent electrification of an adherend (object to be protected), which is not prevented from electrification at the time of peeling, and be reduced in the risk of staining the adherend. Therefore, it is very useful as an antistatic pressure-sensitive adhesive sheet(surface protecting film) in technical fields related to optical and electronic components, where electrification and staining can cause particularly serious problems.

The pressure-sensitive adhesive sheet of the present invention is obtained by forming the pressure-sensitive adhesive layer on a substrate. At that time, crosslinking of the pressure-sensitive adhesive composition is usually carried out after application of the pressure-sensitive adhesive composition, but it is also possible to transfer the pressure-sensitive adhesive layer containing the crosslinked pressure-sensitive adhesive composition to a substrate or the like.

A method for forming the pressure-sensitive adhesive layer on the substrate may be any appropriate method. For example, the pressure-sensitive adhesive composition is applied to a substrate and a polymerization solvent or the like is dried out and removed to form the pressure-sensitive adhesive layer on the substrate and thus, the pressure-sensitive adhesive sheet is produced. Thereafter,the pressure-sensitive adhesivelayer may be cured for the purpose of adjusting the component migration and the crosslinking reaction. Further, in the case of producing the pressure-sensitive adhesive sheet by applying the pressure-sensitive adhesive composition to a substrate, one or more kinds of solvents may be added besides the polymerization solvent to the pressure-sensitive adhesive composition in order to evenly apply the composition to the substrate.

At the time of manufacturing the pressure-sensitive adhesive sheet of the present invention, conventionally known methods employed for manufacturing pressure-sensitive adhesive tapes (pressure-sensitive sheet, pressure-sensitive film, and the like) may be used to form the pressure-sensitive adhesive layer. Specific examples thereof include roll coating, gravure coating, reverse coating, roll blush, spray coating, air knife coating, and extrusion coating using a die coater or the like.

The pressure-sensitive adhesive sheet of the present invention is usually formed in a manner that the thickness of the pressure-sensitive adhesive layer is 3 to 100 $\mu$m and preferably about 5 to 50 $\mu$m. If the thickness of the pressure-sensitive adhesive layer is within the range, moderate balance of the easy peeling property (re-peeling property) and the adherability can be obtained and therefore, it is preferable. The pressure-sensitive adhesive sheet is obtained by forming the pressure-sensitive adhesive layer by coating on one or both surfaces of various kinds of substrates made of a plastic film such as a polyester film or a porous material such as paper or nonwoven fabric and forming the resultant into a sheet-like form, a tape-like form, etc.

The thickness of the substrate composing the pressure-sensitive adhesive sheet of the present invention is usually 5 to 200 $\mu$m and preferably about 10 to 100 $\mu$m. If the thickness of the substrate is within the range, the workability of bonding to an adherend (object to be protected) and the workability of peeling off an adherend are excellent and therefore, it is preferable.

The substrate maybe subjected to releasing or anti-staining treatment with a silicone-based, fluorine-based, long chain alkyl-based, or fatty acid amide-based releasing agent or with a silica powder, easy adhesion treatment such as acid treatment, alkali treatment, primer treatment, corona treatment, plasma treatment, or ultraviolet ray treatment, or coating type, kneading type, or deposition type antistatic treatment, if necessary.

In the case of using the pressure-sensitive adhesive sheet of the present invention as a surface protecting film, the pressure-sensitive adhesive layer is preferably formed on at least one surface of the substrate (supporting film, supporting body) and it is preferable that the substrate is a plastic film subjected to antistatic treatment. Use of such a substrate suppresses electrification of the surface protecting film per se at the time of peeling and therefore it is preferable. Since having the pressure-sensitive adhesive layer formed by crosslinking the pressure-sensitive adhesive composition having the advantageous effects as described above, the pressure-sensitive adhesive sheet prevents electrification of an adherend which is not protected from electrification at the time of peeling and the pressure-sensitive adhesive sheet can serve as a surface protecting film for an adherend with suppressed staining. Therefore, the pressure-sensitive

adhesive sheet is very useful as an antistatic surface protecting film in technical fields related to optical and electronic components where electrification and staining are particularly serious problems. When the substrate is a plastic film and the plastic film is subjected to antistatic treatment, those which suppress electrification of the surface protecting film per se and are excellent in the antistatic property to the adherend can be obtained.

The substrate is more preferably a plastic film having heat resistance and solvent resistance and flexibility. When the substrate has flexibility, the pressure-sensitive adhesive composition can be applied by a roll coater or the like and the product can be wound into a roll.

The plastic film is not particularly limited as far as it can be formed into a sheet or a film, and examples include a polyolefin film such as polyethylene, polypropylene, poly- 1- butene, poly- 4- methyl- 1- pentene, an ethylene·propylene copolymer, an ethylene·1- butene copolymer, an ethylene·vinyl acetate copolymer, an ethylene·ethyl acrylate copolymer, and an ethylene·vinyl alcohol copolymer, a polyester film such as polyethylene terephthalate, polyethylene naphthalate, and polybutylene terephthalate, a polyacrylate film, a polystyrene film, a polyamide film such as nylon 6, nylon 6, 6, and partially aromatic polyamide, a polyvinyl chloride film, a polyvinylidene chloride film, and a polycarbonate film.

In the present invention, antistatic treatment which is performed on the plastic film is not particularly limited, but for example, a method for providing an antistatic layer on at least one surface of a generally used substrate, or a method for kneading a kneading-type antistatic agent into a plastic film is employed. Examples of the method for providing an antistatic layer on at least one surface of a substrate include a method for applying an antistatic resin comprising an antistatic agent and a resin component, or an electrically conductive resin containing an electrically conductive polymer or an electrically conductive substance, and a method for depositing or plating an electrically conductive substance.

Examples of an electrification preventing agent contained in an electrification preventing resin include a cation-type electrification preventing agent having a cationic functional group such as a quaternary ammonium salt, a pyridinium salt, and a primary, secondary or tertiary amino group, an anion-type electrification preventing agent having an anionic functional group such as a sulfonic acid salt, a sulfuric acid ester salt, a phosphonic acid salt, and a phosphoric ester salt, an amphoteric-type electrification preventing agent such as alkylbetain and a derivative thereof, imidazoline and a derivative thereof, and alanine and a derivative thereof, a nonion-type electrification preventing agent such as glycerin and a derivative thereof, and polyethylene glycol and a derivative thereof, and an ionicelectrically conductive polymer obtained by polymerizing or copolymerizing a monomer having the aforementioned cation-type, anion-type, or amphoteric-type ionic electrically conductive group. These compounds may be used alone, or two or more of them may be used by mixing.

Specifically, examples of the cation- type electrification preventing agent include a (meth) acrylate copolymer having a quaternary ammonium group such as an alkyl trimethylammmonium salt, acyloylamidopropyltrimethtylammonium methosulfate, an alkylbenzylmethylammonium salt, acyl choline chloride, and polydimethylaminoethyl methacrylate, a styrene copolymer having a quaternary ammonium group such as polyvinylbenzyltrimethylammonium chloride, and a diallylamine copolymer having a quaternary ammonium group such as polydiallyldimethylammonium chloride. The compounds may be used alone, or two or more kinds may be used by mixing.

Examples of the anion-type electrification preventing agent include an alkyl sulfonic acid salt, an alkylbenzenesulfonic acid salt, an alkyl sulfate ester salt, an alkyl ethoxy sulfate ester salt, an alkyl phosphate ester salt, and a sulfonic acid group-containing styrene copolymer. These compounds may be used alone, or two or more kinds may be used by mixing.

Examples of the amphoteric-type electrification preventing agent include alkylbetain, alkylimidazoliumbetain, and carbobetaingrafted copolymer. These compounds may be used alone, or two or more kinds may be used by mixing.

Examples of the nonion- type electrification preventing agent include fatty acid alkylolamide, di (2- hydroxyethyl) alkylamine, polyoxyethylenealkylamine, fatty acid glycerin ester, polyoxyethylene glycol fatty acid ester, sorbitan fatty acid ester, polyoxysorbitan fatty acid ester, polyoxyethylene alkyl phenyl ether, polyoxyethylene alkyl ether, polyethylene glycol, polyoxyethylenediamine, a copolymer consisting of polyether, polyester and polyamide, and methoxypolyethyleneglycol (meth) acrylate. These compounds may be used alone, or two or more kinds may be used by mixing.

Examples of the electrically conductive polymer include polyaniline, polypyrrole and polythiophene. These electrically conductive polymers may be used alone, or two or more kinds may be used by mixing.

Examples of the electrically conductive substance include tin oxide, antimony oxide, indium oxide, cadmium oxide, titanium oxide, zinc oxide, indium, tin, antimony, gold, silver, copper, aluminum, nickel, chromium, titanium, iron, covert, copper iodide, and an alloy and a mixture thereof. These electrically conductive substances may be used alone, or two or more kinds may be used by mixing.

As a resin component used in the electrification preventing resin and the electrically conductive resin, a generally used resin such as polyester, acryl, polyvinyl, urethane, melanine and epoxy is used. In the case of a polymer-type electrification preventing agent, it is not necessary that a resin component is contained. In addition, the electrification preventing resin component may contain compounds of a methylolated or alkylolated melanine series, a urea series, a glyoxal series, and an acrylamide series, an epoxy compound, or an isocyanate compound as a crosslinking agent.

An electrification preventing layer is formed, for example, by diluting the aforementioned electrification preventing resin, electrically conductive polymer or electrically conductive resin with a solvent such as an organic solvent and water, and coating this coating solution on a plastic film, followed by drying.

Examples of an organic solvent used in formation of the electrification preventing layer include methyl ethyl ketone, acetone, ethyl acetate, tetrahydrofuran, dioxane, cyclohexanone, n-hexane, toluene, xylene, methanol, ethanol, n-propanol and isopropanol. These solvents may be used alone, or two or more kinds may be used by mixing.

As a coating method in formation of the electrification preventing layer, the known coatingmethod is appropriately used, and examples include roll coating, gravure coating, reverse coating, roll brushing, spray coating, and air knife coating methods, an immersing and curtain coating method, and an extrusion coating method with a die coater.

A thickness of the aforementioned electrification preventing resin layer, electrically conductive polymer or electrically conductive resin is usually 0.001 to 5 μm, preferably around 0 . 03 to 1 μm. Within the above range, the plastic film is less likely to degrade in heat resistance, solvent resistance and flexibility, which is preferred.

Examples of a method of depositing or plating an electrically conductive substance include vacuum deposition, sputtering, ion plating, chemical deposition, spray pyrolysis, chemical plating, and electric plating methods.

The thickness of the electrically-conductive material layer is generally from 0.002 to 1 μm, preferably from 0.005 to 0.5 μm. Within the above range, the plastic film is less likely to degrade in heat resistance, solvent resistance and flexibility, which is preferred.

As the kneading-type antistatic agent, the aforementioned antistatic agent is appropriately used. The amount of the kneading-type antistatic agent to be blended is 20% by weight or less, preferably in a range of 0.05 to 10% by weight, based on the total weight of a plastic film. Within the above range, the plastic film is less likely to degrade in heat resistance, solvent resistance and flexibility, which is preferred. A kneading method is not particularly limited as far as it is a method by which the antistatic agent can be uniformly mixed into a resin used in a plastic film, but for example, a heating roll, a Banbury mixer, a pressure kneader, and a biaxial kneading machine are used.

If necessary, in the pressure sensitive adhesive sheet and the surface protecting film of the present invention, a separator can be bonded onto a surface of a pressure-sensitive adhesive layer for the purpose of protecting a pressure-sensitive adhesive surface.

The material used to form the separator may be paper or a plastic film. The plastic film is preferably used because of its good surface smoothness. Such a film may be of any type capable of protecting the pressure-sensitive adhesive layer, and examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, an ethylene-vinyl acetate copolymer film and the like.

The separator generally has a thickness of about 5 to 200 μm, and preferably about 10 to 100 μm. Within the above range, good workability can be obtained in bonding to the pressure-sensitive adhesive layer and in peeling from the pressure-sensitive adhesive layer, which is preferred. If necessary, the separator may be subjected to release and antifouling treatment with a silicone, fluoride, long-chain alkyl, or fatty acid amide release agent or silica powder or subj ected to antistatic treatment of coating type, kneading type, vapor-deposition type, or the like.

In the pressure-sensitive adhesive sheet (including the case for in a surface protecting film) of the present invention, the pressure-sensitive adhesive layer used for the pressure-sensitive adhesive sheet preferably has a 180° peeling adhesion (at a peeling rate of 30 m/min: high speed peeling) to the surface of a TAC polarizing plate (the TAC surface) at 23°C and 50% RH (an adhesion to the TAC) of 2.2 N /25 mm or less, more preferably 2.1 N/25 mm or less, and furthermore preferably 0.05 to 2.0 N/25 mm. When the adhesion is adjusted to 2.2 N/25 mm or less, the pressure-sensitive adhesive sheet is easy to be peeled off and provided with improved productivity and handling property during the process for manufacturing a polarizing plate or a liquid crystal display device and therefore it is preferable. On the other hand, when the peeling adhesion (at a peeling rate of 30 m/min: high speed peeling) exceeds 2.2 N/25 mm, peeling off the pressure-sensitive adhesive sheet (surface protecting film) from the adherend becomes difficult and the workability is inferior when the pressure-sensitive adhesive sheet (surface protecting film) is unnecessary, and moreover, the adherend is damaged during the peeling process and therefore, it is not preferable.

The pressure- sensitive adhesive sheet of the present invention is a pressure- sensitive adhesive sheet having a pressure- sensitive adhesive layer which contains an alkali metal salt and iron atoms and has a 180° peeling adhesion (at a peeling rate of 30 m/min: high speed peeling) to the surface of a TAC polarizing plate (the TAC surface) at 23°C and 50% RH (an adhesion to the TAC) of 2.2 N/ 25 mm or less, preferably 2.1 N/ 25 mm or less, and more preferably 0.05 to 2.0 N/ 25 mm. When the adhesion is adjusted to 2.2 N/ 25 mm or less, the pressure- sensitive adhesive sheet is easy to be peeled off and provided with improved productivity and handling property during the process for manufacturing a polarizing plate or a liquid crystal display device and therefore it is preferable. On the other hand, when the peeling adhesion (at a peeling rate of 30 m/min: high speed peeling) exceeds 2.2 N/ 25 mm, peeling off the pressure-sensitive adhesive sheet (surface protecting film) from the adherend becomes difficult and the workability is inferior when the pressure- sensitive adhesive sheet (surface protecting film) is unnecessary and moreover, the adherend is damaged during the peeling process and therefore, it is not preferable. Raw materials used for the pressure- sensitive adhesive layer and the alkali metal salt are not particularly limited and the above- mentioned (meth) acryl- based polymers,

crosslinking agents, alkali metal salts, organopolysiloxane having an oxyalkylene group, and the like can be used and also the preparation method for the pressure- sensitive adhesive sheet can be employed. As the iron atoms, the above-mentioned catalyst having iron as the active center can also be employed.

The pressure-sensitive adhesive sheet of the present invention has a content of iron atoms preferably 1 to 1500 ppm, more preferably 1.5 to 750 ppm, and furthermore preferably 3 to 300 ppm in the pressure-sensitive adhesive layer. When the content of the iron atoms is within the range in the pressure-sensitive adhesive layer (in the entire weight), crosslinking reaction can be completed quickly and the adhesion of the pressure-sensitive adhesive layer to the TAC surface can be suppressed to be low and therefore, it is a preferable embodiment.

The pressure-sensitive adhesive sheet of the present invention (including the case for use in a surface protecting film) has a potential (peeling electrification voltage: kV, absolute value) of the pressure-sensitive adhesive layer used for the pressure-sensitive adhesive sheet, which is generated on the TAC polarizing plate surface when the pressure-sensitive adhesive sheet is peeled off under the condition of 23°C and 50% RH, at a peeling angle of 150°, and a peeling rate of 30 m/min (high speed peeling) of preferably 1.5 kV or lower and more preferably 1.0 kV or lower. If the peeling electrification voltage exceeds 1.5 kV, for example, a liquid crystal driver or the like may possibly be damaged and therefore, it is not preferable.

An optical member of the present invention is preferably those which are protected with the pressure-sensitive adhesive sheet. The pressure-sensitive adhesive sheet can suppress the adhesion at high speed peeling to be low, is excellent in the easy peeling property, the re-peeling property and the workability. Thus, it is usable for the surface protecting use (surface protecting film) at the time of processing, transporting, shipping, and the like, and therefore it is useful for protecting the surface of the optical member (polarizingplate and the like). In particular, the pressure-sensitive adhesive sheet can be used for plastic products in which static electricity tends to be generated easily and is thus very useful particularly for preventing electrification in optical and electronic components-related technical fields where electrification is a serious problem.

## Examples

Examples which specifically show constructions and effects of the present invention will be described below. However, the present invention is not limited thereto. Evaluation items in examples were measured by the following procedure.

### Preparation of (meth)acryl-based polymer

A four- neck flask equipped with a stirring blade, a thermometer, a nitrogen gas introduction tube, and a condenser was charged with 100 parts by weight of 2- ethylhexyl acrylate (2EHA), 10 parts by weight of 4- hydroxybutyl acrylate (4HBA), 0.01 parts by weight of acrylic acid (AA), 0.2 parts by weight of 2, 2'- azobisisobutyronitrile as a polymerization initiator, and 157 parts by weight of ethyl acetate and nitrogen gas was introduced under a condition of stirring mildly and then polymerization reaction was performed for 6 hours while the liquid temperature in the flask being kept at about 65°C to prepare a (meth) acryl- based polymer solution (40 wt. %) . This acryl- based polymer had a weight average molecular weight of 540, 000 and a glass transition temperature (Tg) of- 67°C.

### Preparation of antistatic-treated film

An antistatic agent solution was prepared by diluting 10 parts by weight of an antistatic agent (Microsolver RMd-142, manufactured by Solvex Co., Ltd., containing, asmaincomponents, tin oxide and a polyester resin) with a mixed solvent containing 30 parts by weight of water and 70 parts by weight of methanol.

The obtained antistatic agent solution was applied to a polyethylene terephthalate (PET) film (thickness of 38 μm) using a Meyer bar, followed by drying a 130°C for 1 minute to remove the solvent to form an antistatic layer (thickness: 0.2 μm), and thus an antistatic-treated film was prepared.

## Example 1

### Preparation of pressure-sensitive adhesive solution

The acryl- based polymer solution (40 wt. %) was diluted to 20% by weight with ethyl acetate. Then, 500 parts by weight (solid matter: 100 parts by weight) of the obtained solution was mixed and stirred with 2 parts by weight (solid matter: 0.2 parts by weight) of a solution obtained by diluting an organopolysiloxane having an oxyalkylene group in a side chain (trade name: KF- 353, manufactured by Shin- Etsu Silicone Co., Ltd., an HLB value: 10) to 10% with ethyl acetate, 5 parts by weight (solidmatter: 0.05 parts by weight) ofasolutionobtained by diluting lithium bis (trifluorometh-

anesulfone) imide (LiN $(CF_3SO_2)_2$: LiTFSI, manufactured by Tokyo Kasei Kogyo Co., Ltd.) to 1% with ethyl acetate as an alkali metal salt, that is, an antistatic agent, 1.5 part by weight (solid matter: 1.5 part by weight) of an isocyanurate body of hexamethylene diisocyanate (CORONATE HX, manufactured by Nippon Polyurethane Industry Co., Ltd.) as a crosslinking agent, 0.5 parts by weight (solid matter: 0.005 parts by weight) of tris (acetylacetonato) iron (Fe $(AcAc)_3$, manufactured by Tokyo Kasei Kogyo Co., Ltd., 1 wt. % ethyl acetate solution) as a crosslinking catalyst (catalyst having iron as the active center), and 0.25 parts by weight of acetylacetone to obtain a pressure- sensitive adhesive solution.

Preparation of pressure-sensitive adhesive sheet

The pressure-sensitive adhesive solution was applied to the opposite surface to the antistatic-treated surface of the antistatic-treated film and heated at 130°C for 2 minutes to form a 15 μm thick pressure-sensitive adhesive layer. Next, a polyethylene terephthalate film (thickness: 25μm) with one side treated with silicone was provided, and the silicone-treated surface of the polyethylene terephthalate film was bonded to the surface of the pressure-sensitive adhesive layer to prepare a pressure-sensitive adhesive sheet.

Examples 2 to 11 and Comparative Examples 1 to 5

(Meth) acryl- based polymers, which are sometimes simply called as a polymer, were prepared in the same manner as that in Example 1, except that types, mixing ratios and the like of raw material monomers and the like were changed as shown in Table 1. In addition, additives which are not written in the Table were added in the same amounts as those in Example 1. By using the polymer, pressure- sensitive adhesive compositions and pressure- sensitive adhesive sheets (surface protecting films) were obtained in the same manner as that in Example 1.

Example 12

A pressure-sensitive adhesive composition and a pressure-sensitive adhesive sheet were prepared in the same manner as that in Example 1 or the like, except that 0.2 parts by weight of a polyether type surfactant containing no organopolysiloxane (trade name: 17R-4, manufactured by ADEKA, a number average molecular weight: 2500, a PO content: 60 wt.%) was used in Example 12 in place of 0.2 parts by weight of the organopolysiloxane (trade name: KF-353, manufactured by Shin-Etsu Silicone Co., Ltd., an HLB value: 10) in Example 1.

Evaluation

The (meth) acryl- based polymers (polymers), the pressure- sensitive adhesive compositions (solutions), and the pressure- sensitive adhesive sheets obtained in Examples and Comparative Examples were evaluated according the following measurement methods and evaluation methods. As evaluation results, physical property evaluation results of polymers are shown in Table 1, evaluation of the pressure- sensitive adhesive compositions are shown in Table 2, and evaluation of the pressure- sensitive adhesive sheets (surface protecting films) are shown in Table 3.

<Measurement of Weight Average Molecular Weight>

A weight average molecular weight (Mw) of the (meth) acryl-based polymers obtained in Examples and Comparative Examples was measured using a GPC apparatus (HLC-8220GPC manufactured by Tosoh Corporation). Measuring conditions are as follows.

Sample concentration: 0.2wt% (THF solution)
Sample injection amount: 10μl
Eluent: THF
Flow rate: 0.6ml/min
Measuring temperature: 40°C
Column:
Sample column;
TSKguard column SuperHZ-H (1 column) +TSK gel Super HZM-H (2 columns)
Reference column;
TSK gel SuperH-RC(1 column)
Detector: Refractive index detector (RI)
A molecular weight was obtained in terms of polystyrene.

<Theoretical Value of Glass Transition Temperature>

A glass transition temperature Tg (°C) of the (meth) acryl-based polymers obtained in Examples and Comparative Examples was determined by the following equation using the following reference values as a glass transition temperature Tgn (°C) of a homopolymer of each monomer.

$$\text{Equation: } 1/(Tg + 273) = \Sigma[Wn/(Tgn + 273)]$$

[where Tg (°C) represents a glass transition temperature of a copolymer, Wn (- ) represents a weight fraction of each monomer, Tgn (°C) represents a glass transition temperature of a homopolymer of each monomer, and n represents a kind of each monomer]

Reference values:

2-ethylhexyl acrylate (2EHA): -70°C
2-hydroxyethyl acrylate (2HEA): -15°C
4-hydroxybutyl acrylate (4HBA): -32°C
acrylic acid (AA): 106°C

"Synthesis and Design of Acrylic Resin and Development of New Applications" (published by Publishing Department of Chuo Keiei Kaihatsu Center) and "Polymer Handbook" (John Wiley & Sons) were referred for literature values.

<Measurement of Glass Transition Temperature>

A glass transition temperature Tg (°C) of the (meth) acryl-based polymers obtained in Examples and Comparative Examples was determined by the method described below using a dynamic viscoelasticity measurement system (ARES manufactured by Rheometric Scientific Inc.).

Sheets of a (meth) acryl- based polymer having a thickness of 20 μm were laminated into a thickness of about 2 mm, and this was punched into φ7.9 mm to prepare a cylindrical pellet, and this was used as a sample for measuring a glass transition temperature.

The measuring sample was fixed on a jig of a φ7.9 mm parallel plate and temperature dependency of loss elastic modulus G" was measured using the dynamic viscoelasticity measuring apparatus, and a temperature at which the resulting G" curve became a maximum was adopted as a glass transition temperature (°C).

Measuring conditions are as follows.

Measurement: shear mode
Temperature range: -70°C to 150°C
Temperature raising rate: 5°C/min
Frequency: 1 Hz

Pot life

Pot life was evaluated by carrying out viscositymeasurement for each pressure-sensitive adhesive composition (solution) by using a rotary viscometer (B-type viscometer, manufactured by TOKYO KEIKI INC.) under the condition of 25°C and 20 rpm.

o: when the viscosity 24 hours after preparation (mixing) of pressure-sensitive adhesive composition (solution) was less than 2 times as high as the viscosity immediately after preparation.
×: when the viscosity 24 hours after preparation (mixing) of pressure-sensitive adhesive composition (solution) was equal to or more than 2 times as high as the viscosity immediately after preparation or gelation occurred.

Measurement of peeling electrification voltage to TAC

After each of the produced pressure-sensitive adhesive sheets was cut into a piece in a size of 70 mm in width and 130 mm in length and the separator was peeled off, the piece was press-bonded by using a hand roller to a surface of a TAC polarizing plate (a TAC surface) (trade name "SEG1423DU", manufactured by NITTO DENKO CORPORATION,

70 mm in width and 100 mminlength), which hadbeenbondedtoanacrylicplate (Acrylite, manufactured by Mitsubishi Rayon Co., Ltd., 2 mm in thickness, 70 mm in width, and 100 mm in length) having undergone static elimination in advance, in such a manner that one end of the piece protruded by 30 mm out of the plate. Subsequently, the resulting sample was allowed to stand at 23°C and 50% RH for a day and then set at a prescribed location as shown in Fig. 1. The one end protruding by 30 mm was fixed to an automatic winder, and the piece was peeled off at a peeling angle of 150° and a peeling rate of 30 m/min. The potential (peeling electrification voltage: kV) generated on the surface of the polarizing plate in this process was measured using a potentiometer (KSD-0103, manufactured by KASUGA ELECTRIC WORKS LTD.) fixed at a prescribed position. The distance of the sample and the potentiometer was set to 100 mm at the time of measurement for the acrylic plate surface. The measurement was performed in an environment of 23°C and 50% RH.

The peeling electrification voltage (absolute value) of the pressure-sensitive adhesive sheet of the present invention is preferably 1. 5kV or lower and more preferably 1.0 kV or lower. If the peeling electrification voltage exceeds 1.5 kV, for example, a liquid crystal driver or the like may possibly be damaged and therefore, it is not preferable.

Adhesion to TAC

After each of the produced pressure-sensitive adhesive sheets was cut in a size of 25 mm wide and 100 mm long and the separator was peeled off, the cut piece was laminated to the surface (TAC surface: adherend surface) of a TAC polarizing plate (trade name: SEG1423DU, manufactured by NITTO DENKO CORPORATION, 70 mm in width and 100 mm in length) under a pressure of 0.25 MPa at a speed of 0.3 m/min by using a laminator (compact laminator, manufactured by Tester Sangyo Co., Ltd.) to obtain an evaluation sample.
After the lamination, the sample was allowed to stand in an environment at 23°C and 50% RH for 30 minutes, and then using a universal tensile tester, the adhesion (N/25 mm) was measured at the time of peeling off the sheet at a peeling rate of 30 m/min and a peeling angle of 180° to measure the adhesion to TAC (peeling power). The measurement was performed in an environment at 23°C and 50% RH.

The adhesion to TAC of the pressure-sensitive adhesive sheet of the present invention is preferably 2.2 N/25 mm or less, more preferably 2.1 N/25 mm or less, and furthermore preferably 2.0 N/25 mm or less. If the adhesion is adjusted to 2.2 N/25 mm or less, the pressure-sensitive adhesive sheet is easy to be peeled off and it improves productivity and handing property in the process of manufacturing a polarizing plate or a liquid crystal display device and therefore, it is preferable. If the adhesion exceeds 2.2 N/25 mm, it becomes difficult to peel off the pressure-sensitive adhesive sheet (surface protecting film) from an adherend and peeling workability becomes inferior when the pressure-sensitive adhesive sheet (surface protecting film) is unnecessary and further an adherend is damaged during the peeling step and therefore, it is not preferable.

Analysis of content of iron atoms in pressure-sensitive adhesive layer

Sampling of 50 mg of the pressure-sensitive adhesive layer composing each of the pressure-sensitive adhesive sheets obtained in Examples and Comparative Examples and pretreatment by a pressurizing oxidation decomposition method were carried out, and then quantitative analysis (unit: ppm) of the content of iron atoms was carried out with ICP MS manufactured by Agilent Technologies.

[Table 1]

| Unit (parts by weight) | | Monomer composition and physical properties of obtained polymer | | | | |
|---|---|---|---|---|---|---|
| | | 2EHA | 2HEA | 4HBA | Tg (°C) | Mw |
| Example | 1 | 100 | | 10.00 | -67 | 54,0000 |
| | 2 | 100 | | 10.00 | -67 | 54,0000 |
| | 3 | 100 | | 8.75 | -68 | 54,0000 |
| | 4 | 100 | | 7.50 | -68 | 54,0000 |
| | 5 | 100 | | 6.25 | -68 | 54,0000 |
| | 6 | 100 | 8.00 | | -67 | 54,0000 |
| | 7 | 100 | | 10.00 | -67 | 54,0000 |
| | 8 | 100 | | 8.75 | -68 | 54,0000 |
| | 9 | 100 | | 7.50 | -68 | 54,0000 |
| | 10 | 100 | | 6.25 | -68 | 54,0000 |
| | 11 | 100 | | 10.00 | -67 | 54,0000 |
| | 12 | 100 | | 10.00 | -67 | 54,0000 |
| Comparative Example | 1 | 100 | | 5.00 | -68 | 54,0000 |
| | 2 | 100 | 4.00 | | -68 | 54,0000 |
| | 3 | 100 | | 10.00 | -67 | 54,0000 |
| | 4 | 100 | | 5.00 | -68 | 54,0000 |
| | 5 | 100 | | 5.00 | -68 | 54,0000 |

[Table 2]

| Unit (parts by weight) | | Obtained polymer | Crosslinking agent | Ionic compound | | Catalyst | | | Pot life |
|---|---|---|---|---|---|---|---|---|---|
| | | | C/HX | Type (trade name) | Mixing ratio | Type | Mixing ratio | Fe atom content | |
| Example | 1 | 100 | 1.5 | LiTFSI | 0.06 | Fe $(AcAc)_3$ | 0.005 | 8 | ○ |
| | 2 | 100 | 1.0 | LiTFSI | 0.06 | Fe $(AcAc)_3$ | 0.005 | 8 | ○ |
| | 3 | 100 | 1.5 | LiTFSI | 0.06 | Fe $(AcAc)_3$ | 0.005 | 8 | ○ |
| | 4 | 100 | 1.5 | LiTFSI | 0.06 | Fe $(AcAc)_3$ | 0.005 | 8 | ○ |
| | 5 | 100 | 1.5 | LiTFSI | 0.06 | Fe $(AcAc)_3$ | 0.005 | 8 | ○ |
| | 6 | 100 | 1.5 | LiTFSI | 0.06 | Fe $(AcAc)_3$ | 0.005 | 8 | ○ |
| | 7 | 100 | 1.5 | LiTFSI | 0.06 | Fe $(AcAc)_3$ | 0.010 | 16 | ○ |
| | 8 | 100 | 1.5 | LiTFSI | 0.06 | Fe $(AcAc)_3$ | 0.010 | 16 | ○ |
| | 9 | 100 | 1.5 | LiTFSI | 0.06 | Fe $(AcAc)_3$ | 0.010 | 16 | ○ |
| | 10 | 100 | 1.5 | LiTFSI | 0.06 | Fe $(AcAc)_3$ | 0.010 | 16 | ○ |
| | 11 | 100 | 1.5 | LiTFSI | 0.06 | Fe $(AcAc)_3$ | 0.005 | 8 | ○ |
| | 12 | 100 | 1.5 | LiTFSI | 0.06 | Fe $(AcAc)_3$ | 0.005 | 8 | ○ |
| Comparative Example | 1 | 100 | 1.5 | LiTFSI | 0.06 | Fe $(AcAc)_3$ | 0.005 | 8 | ○ |
| | 2 | 100 | 1.5 | LiTFSI | 0.06 | Fe $(AcAc)_3$ | 0.005 | 8 | ○ |
| | 3 | 100 | 1.5 | | | Fe $(AcAc)_3$ | 0.005 | 8 | ○ |
| | 4 | 100 | 1.5 | LiTFSI | 0.06 | Sn | 0.015 | un-detected | × |
| | 5 | 100 | 1.5 | KTFSI | 0.06 | Fe $(AcAc)_3$ | 0.005 | 8 | ○ |
| Remark) The Fe atom content in Table 2 (herein, unit: ppm) shows the content of Fe atoms in the pressure-sensitive adhesive layer (in the entire weight). In the case a Sn catalyst was used, the Fe atom content was less than the detection limit of the lower limit and in this case, it was determined to be "un-detected". | | | | | | | | | |

[Table 3]

| Evaluation result | | Adhesion to TAC [N/25 mm] | Peeling electrification voltage to TAC [kV] |
|---|---|---|---|
| | | Peeling rate 30 m/min | Peeling rate 30 m/min |
| Example | 1 | 0.6 | 0.0 |
| | 2 | 0.7 | 0.0 |
| | 3 | 1.0 | 0.0 |
| | 4 | 1.1 | 0.0 |
| | 5 | 1.7 | 0.0 |
| | 6 | 1.8 | 0.0 |
| | 7 | 0.7 | 0.0 |
| | 8 | 0.9 | 0.0 |
| | 9 | 1.1 | 0.0 |
| | 10 | 1.6 | 0.0 |
| | 11 | 0.8 | 0.2 |
| | 12 | 1.8 | 0.2 |
| Comparative Example | 1 | 2.5 | 0.0 |
| | 2 | 2.7 | 0.0 |
| | 3 | 0.7 | 2.5 |
| | 4 | 1.1 | 0.0 |
| | 5 | 2.4 | 0.3 |

The mixing contents in Table 1 and Table 2 are shown by weight of solid matter. The abbreviations in Table 1 and Table 2 are as follows.

2EHA: 2-ethylhexyl acrylate
2HEA: 2-hydroxylethyl acrylate
4HBA: 4-hydroxybutyl acrylate
C/HX: Trade name "Coronate HX", manufactured by Nippon Polyurethane Industry Co., Ltd., (isocyanurate body of hexamethylene diisocyanate) (crosslinking agent)
LiTFSI: Lithiumbis(trifluoromethanesulfonyl)imide (LiN $(CF_3SO_2)_2$, manufactured by Tokyo Kasei Kogyo Co. , Ltd. , alkali metal salt) (antistatic agent)
KTFSI: potassiumbis (trifluoromethanesulfonyl) imide (KN $(CF_3SO_2)_2$, manufactured by Kanto Chemical Co., Inc. alkali metal salt) (antistatic agent)
Fe $(AcAc)_3$: tris (acetylactonato) iron, manufactured by Tokyo Kasei Kogyo Co., Ltd., catalyst having iron as active center (crosslinking catalyst)
Sn: dibutyltin dilaurate, manufactured by Tokyo Kasei Kogyo Co. , Ltd. (tin catalyst)

According to the evaluation results in Table 2 and Table 3, in all the examples, the pressure-sensitive adhesive compositions (solutions) were found excellent in pot life and the obtained pressure-sensitive adhesive sheets were found excellent in the antistatic property and the adhesive property and particularly excellent in the easy peeling property (re-peeling property) at the time of high speed peeling and thus usable for surface protecting use in optical fields or the like.

On other hand, since the mixing amount of the hydroxyl group- containing (meth) acryl- based monomer as a raw material monomer was small in Comparative Examples 1, 2, and 5, it was found that the adhesion was high at the time of high speed peeling and the easy peeling property/re- peeling property was inferior. Since no antistatic agent was added in Comparative Example 3, it was found that the antistatic property was inferior. Since the Sn (tin) catalyst was added in place of the catalyst having iron as the active center (containing iron atoms) in Comparative Example 4, it was found that the pot life was inferior.

EXPLANATION OF THE REFERENCE NUMERALS

| | |
|---|---|
| 1 | Potential meter |
| 2 | Pressure-sensitive adhesive sheet |
| 3 | Polarizing plate |
| 4 | Acrylic plate |
| 5 | Sample mount |

## Claims

1. A pressure- sensitive adhesive composition comprising a (meth) acryl- based polymer composed of, as raw material monomers, a (meth) acryl- based monomer having an alkyl group of 1 to 14 carbon atoms and a hydroxyl group-containing (meth) acryl- based monomer, an alkali metal salt, and a catalyst having iron as an active center, wherein the hydroxyl group- containing (meth) acryl- based monomer is contained in an amount of 6 parts by weight or more to 100 parts by weight of the (meth) acryl- based monomer having an alkyl group of 1 to 14 carbon atoms.

2. The pressure-sensitive adhesive composition according to claim 1, wherein the alkali metal salt is a lithium salt.

3. The pressure-sensitive adhesive composition according to claim 1 or 2, comprising an organopolysiloxane having an oxylalkylene group.

4. The pressure- sensitive adhesive composition according to any one of claims 1 to 3, comprising 0.01 to 10 parts by weight of a crosslinking agent to 100 parts by weight of the (meth) acryl- based polymer.

5. The pressure- sensitive adhesive composition according to any one of claims 1 to 4, wherein the (meth) acryl-based polymer is composed of the raw material monomers further comprising a carboxyl group- containing (meth) acryl- based monomer.

6. A pressure-sensitive adhesive sheet having a pressure-sensitive adhesive layer formed on at least one surface of a substrate by crosslinking the pressure-sensitive adhesive composition according to any one of claims 1 to 5, wherein an adhesion to a TAC polarizing plate at peeling rate of 30 N/min is 2.2 N/25 mm or less.

7. A pressure-sensitive adhesive sheet having a pressure-sensitive adhesive layer, wherein the pressure-sensitive adhesive layer comprises an alkali metal salt and iron atoms and has an adhesion to a TAC polarizing plate at peeling rate of 30m/min of 2.2 N/25 mm or less.

8. The pressure-sensitive adhesive sheet according to claim 7, wherein the iron atom content in the pressure-sensitive adhesive layer is 1 to 1500 ppm.

9. An optical member protected by the pressure-sensitive adhesive sheet according to any one of claims 6 to 8.

Fig.1

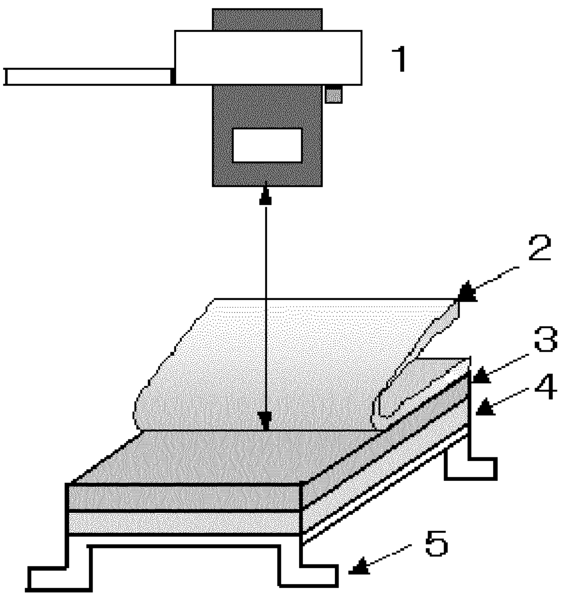

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9165460 A


### Non-patent literature cited in the description


- Synthesis and Design of Acrylic Resin and Development of New Applications. Publishing Department of Chuo Keiei Kaihatsu Center
- Polymer Handbook. John Wiley & Sons